# EUROPÄISCHE PATENTSCHRIFT

(11) **EP 0 657 210 B1**
(45) Veröffentlichungstag und Bekanntmachung des Hinweises auf die Patenterteilung: **22.10.1997**
(21) Anmeldenummer: 94119191.8
(22) Anmeldetag: 06.12.1994
(51) Int. Cl.: B01J 19/32, F28F 25/08

(54) **Einbaukörper für Anlagen zum Energie- und/oder Stoffaustausch und/oder zur Bewirkung von chemischen Reaktionen**
Filling element for plants for energy and/or mass exchange and/or effecting chemical reactions
Elément de remplissage pour installations pour l'échange d'énergie et/ou de matière et/ou pour effectuer des réactions chimiques

(30) Priorität: 09.12.1993 AT 2487/93
(43) Veröffentlichungstag der Anmeldung: 14.06.1995
(73) Patentinhaber: FAIGLE, Heinz, A-6971 Hard (AT)
(72) Erfinder: FAIGLE, Heinz, A-6971 Hard (AT)
(74) Vertreter: Hefel, Herbert, Dipl.-Ing.

(56) Entgegenhaltungen:
- EP-A- 0 529 422
- EP-A- 0 559 219
- DE-A- 2 748 426
- FR-A- 1 528 791
- PATENT ABSTRACTS OF JAPAN vol. 18, no. 79 (M-1557) 9. Februar 1994 & JP-A-05 288 490 (MITSUBISHI CORP.) 2. November 1993

## Beschreibung

Die Erfindung bezieht sich auf einen Einbaukörper für Anlagen zum Energie-und/oder Stoffaustausch und/oder zur Bewirkung von chemischen Reaktionen mit den Merkmalen des Oberbegriffes des Patentanspruches 1.

Für solche Anlagen sind spezifisch konstruierte Einbaukörper und Tropfenabscheider bekannt. In Gegenstrom-Anlagen rinnt das über diesen Einbaukörpern versprühte flüssige Medium über Einsätze verschiedenster Bauart von oben nach unten, das gasförmige Medium hingegen strömt nach oben. In Folge verschiedener Umstände, insbesondere der hohen Strömungsgeschwindigkeit des gasförmigen Mediums, die bis zu 4 m/sec und mehr betragen kann, und dem direkten Kontakt der beiden Medien werden durch das nach oben strömende Medium Tropfen oder zumindest Partikel des flüssigen Mediums mitgerissen, die zusammen mit dem nach oben abströmenden gasförmigen Medium insgesamt aus dem Einbaukörper ausgetragen würden, wäre nicht über der Zerstäubungseinrichtung ein herkömmlicher Tropfenabscheider angebracht, der einen Großteil der Flüssigkeitsteilchen abfängt.

Der Restanteil der Tropfen und Flüssigkeitspartikel wird jedoch vom Gasstrom weiter mitgerissen.

Handelt es sich bei der Anlage um einen Kühlturm, so ist eine Schwaden-und Nebelbildung im unmittelbaren Umgebungsbereich und bei entsprechend tiefen Temperaturen noch zusätzlich eine Glatteisbildung unvermeidlich.

Handelt es sich bei der Anlage um einen Gaswäscher oder eine Reaktionskolonne, so werden mit dem abströmenden gasförmigen Medium nicht unerhebliche Mengen an eventuellen Schadstoffen in die Umgebung ausgetragen.

Ausgehend von diesem Stand der Technik zielt die Erfindung darauf ab, einen Einbaukörper konstruktiv so zu gestalten, daß diese aufgezeigten Nachteile vermieden oder zumindest in erheblichen Umfang eingeschränkt werden können.

Dazu wird im Folgenden beschrieben, wie erfindungsgemäß - neben dem im Nachstehenden nicht miterwähnten und in den eingangs genannten Anlagen herkömmlichen Peripherie, wie Ventilatoren, Pumpen, Zu- und Ableitungen, Filter, Steuerungen usw. gebräuchlicherweise Vorhandenem - in einem unten und oben mit Öffnungen versehenen Gehäuse im Gegenstrom zu der von oben kommenden Flüssigkeit ein Gasstrom gedrückt oder motorisch oder durch Naturzug gesaugt wird, und dabei sowohl die Flüssigkeit als auch das Gas unterschiedliche vertikal angeordnete Zonen durchströmen.

Die Summe dieser Zonen wird im Folgenden als "Reaktor-Gruppe" bezeichnet.

Dabei ist als erstes der oberste, als erste Zone bezeichnete Bereich der Reaktor-Gruppe zu nennen. Er bildet die Basis der erfindungsgemäßen Bauweise und des mit ihr ermöglichten Verfahrens.

Diese Zone kann auch für sich allein als erfinderisch gelten, denn sie vereinigt in sich
- ein Zuleitungssystem für die Flüssigkeit, wobei diese nicht oder nur geringfügigst in Kontakt mit dem durch die erste Zone strömenden Gas kommt,
- das direkt an das Zuleitungssystem angeschlossene Durchleitungskanalsystem, das abwärts durch die erste Zone führt und gegenüber dem strömenden Gas durch Wände getrennt ist,
- einen Wand-Wärmetauscher zwischen der im Kanalsystem abwärts rinnenden Flüssigkeit und dem in den Räumen zwischen den das Kanalsystem begrenzenden Doppelwand-Elementen aufwärts strömenden Gas,
- ein als Tropfenabscheider wirkendes Lenkungssystem für das durch die erste Zone strömende, mit Flüssigkeitspartikeln und eventuell auch mit Verunreinigungen befrachtete Gas,
- eine separierende Ableitungsmöglichkeit für die aus dem Gas ausgeschiedene, eventuell Verunreinigungs-Partikel enthaltende Flüssigkeit,
- unterschiedlich gestaltbare Weitergabe-Bauweisen für die am unteren Ende aus der ersten Zone ausströmende Flüssigkeit in die zweite Zone.

Wie oben erwähnt, wirkt die erste Zone auch als Tropfenabscheider. Im Nachfolgenden wird, ohne die Erfindung darauf zu beschränken, hauptsächlich eine Kontur in Anlehnung an die EU-PS 529 422 (Faigle) beschrieben.

Die wesentlichste Abwandlung gegenüber dieser EU-PS besteht einerseits darin, daß die Schlängelungskontur nicht in Einzelfolien, sondern in Folienpaare oder aneinandergereihte konzentrische Rohrpaare eingeformt ist, die in ihren innerhalb der Doppelwände befindlichen Zwischenräume (Spalte) das Kanalsystem für die abwärts rinnende Flüssigkeit enthalten und andererseits darin, daß von oben her direkt in die Zwischenräume (Spalte) hinein das Zuführungs- und Verteilsystem für die Flüssigkeit mündet.
Der Begriff "mündet" ist bewußt gewählt, denn sowohl das Zuführungs- als auch das Verteilsystem sind zumeist als nicht druckdicht ausgeführte Steckverbindungen bevorzugt.

Nach der obigen Schilderung der grundsätzlichen Bauweise und der damit ermöglichten Aufgabenzuweisung zur ersten Zone der Reaktorgruppe, sind nun die weiteren Zonen der Reaktorgruppe zu erwähnen. Dabei wird dem Abwärtsströmen der Flüssigkeit gefolgt.

Die zweite Zone, und die zumeist weiter folgenden Zonen, dienen den Austauschvorgängen zwischen den beiden Medien, somit zwischen der abwärts strömenden Flüssigkeit und dem im Gegenstrom aufwärts strömenden Gas.

Solche Vorgänge sind zumeist
- der Energieaustausch (z.B. in Kühltürmen oder Erwärmern)
- und/oder der Stoffaustausch (z.B. chemische Reaktionen zwischen Teilen der Medien, oder Strip-Vorgänge, oder der Verdunstungsanteil in Kühltürmen)
- und/oder chemisch-physikalische Reaktionen (z.B. Neutralisationen in Rauchgas-Wäschern).

In diesem Sinne läßt sich die zweite Zone gestalten, als
- eine Freifall-Zone
- oder eine Füllkörper-Zone mit "standard packings"
- oder eine "Hybridtauscher" genannte Zone, die im Nachstehenden weiter beschrieben wird.

Die einfachste Ausführungsart (a) der zweiten Zone besteht sie als Freifallzone auszubilden, in der die aus der ersten Zone kommende Flüssigkeit aufgenommen bzw. durchgelassen wird und diese Flüssigkeit sodann in eine dritte Zone oder in eine Auffangwanne abtropft, wobei die Tropfen vom entgegen strömenden oder von der Seite her in die Gegenstromrichtung einschwenkenden Gas bei geringer Gasgeschwindigkeit nur umspült, bei hoher Gasgeschwindigkeit auch zerteilt werden.

Eine andere Ausführungsart (b) besteht darin, als zweite Zone herkömmliche, beispielsweise aus Wellfolien oder Rohren zusammengefügte oder aus einer Vielzahl von Rohrabschnitten zusammengeschüttete Füllkörper zu verwenden, über deren Oberflächen die Flüssigkeit allseits abrinnt und dabei in laminaren Kontakt mit dem durchströmenden Gas kommt.

Durch Kombination der unter (b) und (a) genannten Bauweise kann auf die zweite Zone eine dritte folgen, wobei die Flüssigkeit zuerst durch das Füllkörperpaket und sodann durch die Freifallzone fließt.

Eine weitere Kombinationsart umfaßt vier Zonen, wobei die aus der ersten Zone abrinnende Flüssigkeit zuerst in eine Freifallzone (a) gelangt, sodann in eine Füllkörperzone (b) und hernach wieder durch eine Freifallzone weitergelangt.

In einer gänzlich anderen Anordnung folgt als zweite Zone in direktem Anschluß an die erste Zone oder nach einem Zwischenbereich eine Austauschzone, in der die Medien teils im Direktkontakt stehen und teils nur im Wand-Wärmetausch.

Im Nachstehenden wird diese Zone "Hybridtauscher" genannt. Bei solchen Tauschern wird nur eine der Seiten der Folien bzw. Rohre von der Flüssigkeit und dem Gas gemeinsam beströmt. Die anderen Seiten bleiben weitgehend trocken. Dort wirkt das Gas nur als Wärmeüberträger durch die Wände der Folien bzw. Rohre hindurch.

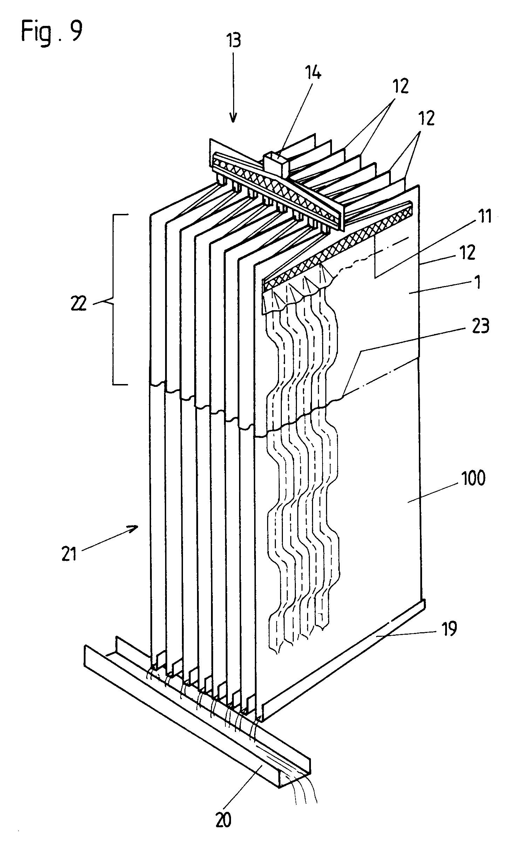

In einer bevorzugten Ausführungsart (c) folgt, wie nachstehend bei der Besprechung der Fig. 9 beschrieben, der Hybridtauscher als zweite Zone in direkter Verlängerung der ersten Zone.

Dazu wird eine der gepaarten Folien bzw. eines der konzentrisch gepaarten Rohre über die Länge des Paarungspartners weg nach unten weitergeführt und übernimmt dabei auf der bisher dem Partner zugewandten Seite ("Naßseite") den Flüssigkeitsstrom aus den vorher gemeinsamen Spalten der Paarungen. Das Gas strömt an beiden Seiten (Naßseite und Trockenseite) aufwärts in die erste Zone, wo die Tropfenabscheidung erfolgt. Daher ist der Begriff "Trockenseite" nur relativ zu verstehen.

Eine andere Art (d) der Hybridtauscher ist in der DE-PS 25 32 544 beschrieben und im Zusammenhang mit der DE-PS 29 50 803 zu sehen. Insbesondere aus der erstgenannten DE-PS ist zu ersehen, daß das abzukühlende Wasser aus einer Sprüheinrichtung oder Tropfvorrichtung kommt und auf die Naßseiten von Folien gelangt. Eine Benutzungsberechtigung vorausgesetzt, könnte der genannte Hybridtauscher als dritte Zone nach der zweiten Zone (Freifallzone) nach der ersten Zone folgen. Laut der zweitgenannten DE-PS liegt ein besonderer Effekt darin, daß die dem direkten Medienkontakt ausgesetzte Laminarfläche bedeutend geringer ist als die Wand-Wärmetauschfläche und deshalb ein geringerer Ausstoß von Flüssigkeitspartikeln aus der Gesamtanlage erwartet werden kann, im Relativvergleich zu gesamtbenetzten Füllkörpern.

Der Vorteil der Hybrid-Bauart, wie beispielsweise vorstehend zu (c) und (d) beschrieben, liegt darin, daß nur ein Teil der Gasmenge in Direktkontakt mit der Flüssigkeit kommt und daher entsprechend weniger Flüssigkeitspartikel mitgerissen werden. Der Nachteil besteht darin, daß auch der Wirkungsgrad geringer ist, als er beim Medien-Vollkontakt erzielbar wäre. Ein Ausgleich ist durch Verlängerung der dem Hybridaustausch gewidmeten Zone erzielbar.

Es ist mit der im Vorstehenden gegebenen Beschreibung der Zonen keineswegs eingeschränkt, daß die der ersten Zone folgenden weiteren Zonen der Reaktorgruppe sich auch wiederholen oder in anderen als der geschilderten Aufeinanderfolgen angeordnet sein dürften oder auch andere dienliche Einbauten mitenthalten können.

Zurückkommend zur ersten Zone der Reaktorgruppe, muß nochmals auf die Entmischung der Medien im Tropfenabscheider-Bereich in der ersten Zone eingegangen werden:

Um eine beabsichtigte Entmischung aufrecht zu erhalten, ist es insbesondere für Rauchgaswäscher, aber auch andere chemisch und/oder physikalisch wirkende Anlagen bedeutungsvoll, daß mittels der erfindungsgemäßen Bauweise auch Aussonderungen, die nicht in die zwischen den Folienpaaren oder Rohrpaaren herab- und ausströmende Waschflüssigkeit bzw. Reaktionsflüssigkeit übergehen sollen, im Rahmen der Tropfenabscheidung endgültig ausgeschieden werden können.
Dazu wird an den unteren, dem Paarungsspalt abgewandten Rändern der Folienpaare bzw. Rohrpaare je eine schräg seitlich nach außen führende Rinne eingeformt, die von oben aus den Gaskanälen kommende, Schmutz- oder Schadstoffe enthaltende, ausgeschiedene Tropfen aufnimmt und abführt.

Sinnvoll ist es, vor diesem der Ableitung dienenden Bereich die Wellungen der Folien etc. flach auslaufen zu lassen. Dadurch wird einerseits das Einformen der Rinnen erleichter, aber andererseits auch, was noch viel wichtiger ist, eine durch die Rinnen verursachte Querschnittsverengung der Gaskanäle verhindert. Noch besser ist es, die Rinnen gestuft anzuordnen.

Zur Lösung dieser komplexen Aufgabe schlägt die Erfindung jene Maßnahmen vor, die Inhalt und Gegenstand des kennzeichnenden Teiles des Patentanspruches 1 sind. Zweckmäßige Ausgestaltungen der Erfindung sind in den Unteransprüchen festgehalten. Zur Veranschaulichung der Erfindung wird diese anhand von Ausführungsbeispielen unter Bezug auf die beiliegenden Zeichnungen näher erörtert, ohne dadurch die Erfindung auf die gezeigten Ausführungsbeispiele einzuschränken. Es zeigen:
- Fig. 1: die Ansicht einer Folie, aus der der erste Abschnitt des Einbaukörpers aufgebaut ist;
- Fig. 2: einen Querschnitt durch diese Folie nach Fig. 1 gemäß der Schnittlinie II-II;
- Fig. 3: einen horizontalen Querschnitt durch ein aus zwei Folien gebildetes Folienpaar und
- Fig. 4: dessen Seitensicht;
- Fig. 5: einen horizontalen Querschnitt durch ein aus Folienpaaren nach den Fig. 3 und 4 gebildetes Paket;
- Fig. 6: den Querverteiler für ein Paket in Schrägsicht und
- Fig. 7: in Seitensicht;
- Fig. 8: in Schrägsicht den oberen Teil des als erster Abschnitt dienenden Paketes;
- die Fig. 9 bis 13: jeweils in Schrägsicht einen Einbaukörper in verschiedenen Ausführungsformen;
- Fig. 14: ein Detail.

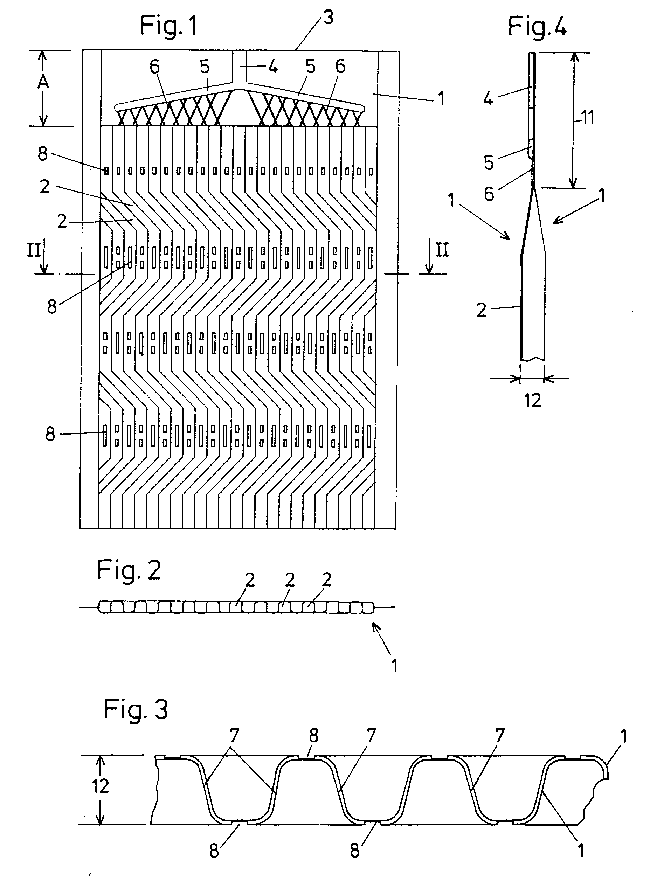

Fig. 1 zeigt in Ansicht eine Folie 1, die über den größten Teil ihrer Längserstreckung parallel zueinander verlaufende, hin- und hergehende Wellenzüge 2 aufweist, die rinnenartige Ausformungen bilden, wobei hier die gedachten Achsen dieser rinnenartigen Ausformungen in einer Ebene liegen. Grundsätzlich ist es möglich, diese Wellenzüge 2 so auszuformen, daß die Achsen der rinnenartigen Verformungen einen räumlichen Verlauf besitzen nach Art einer Schraubenlinie. Dies ist beispielsweise aus der EU-OS 361 225 bekannt. Aus Gründen der Übersichtlichkeit sind hier jedoch nur ebene Wellenzüge 2 gezeigt. Der obere Abschnitt A dieser Folien 1 ist zur Bildung eines Längsverteilers für eine Flüssigkeit ausgeformt. Vom oberen Rand 3 der Folie 1 geht eine mittige Zuleitungsrinne 4 aus, die in stumpfwinkelig absteigende Seitenrinnen 5 übergeht, von deren unterem Rand eine Vielzahl von sich hier kreuzenden Verteilrinnen 6 in die Wellenzüge 2 münden. Zur Bildung eines Folienpaares 12 werden nun zwei Folien 1 dieser Art zusammengefügt, und zwar in der Weise, daß die rinnenartigen Verformungen der Wellenzüge 2 der einen Folie 1 kammartig in die rinnenartigen Verformungen der anderen Folie eingreifen bzw. umgekehrt (Fig. 3), wobei die beiden Folien des Folienpaketes etwas voneinander distanziert sind zur Bildung von Strömungskanälen 7 für die Flüssigkeit. Zur Distanzierung der beiden Folien 1 sind entlang der Wellenzüge 2 stegartige Erhebungen 8 ausgeformt, die als Distanzhalter dienen. Durch die erwähnte paarweise Zusammenfügung der Folien bilden die Zuleitungsrinne 4, die Seitenrinnen 5 und die Verteilerrinnen 6 umfangsgeschlossene Kanäle, die in der Folge als Zuleitungskanal, Seitenkanal und Verteilkanal des Längsverteilers 11 bezeichnet werden. Die eine der beiden Folien, die ein Folienpaar 12 bilden, kann im oberen Abschnitt A auch plan ausgebildet sein. Der obere Teil eines solchen Folienpaares 12 aus Folien der letzterwähnten Art ist in Fig. 4 in Seitensicht gezeigt.

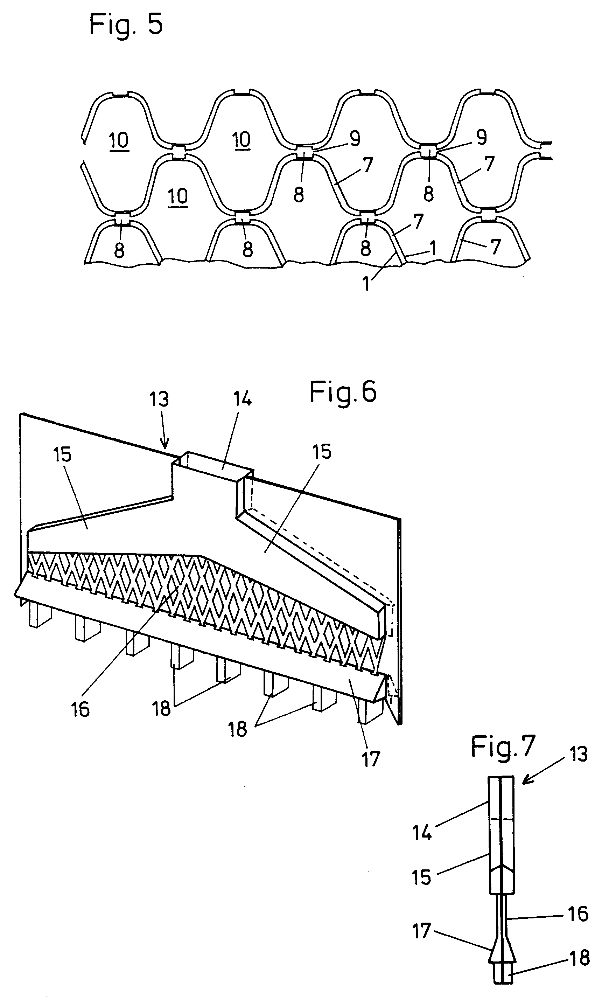

Folienpaare 12 werden zu einem Paket zusammengefügt, und eine horizontalen Querschnitt durch ein solches Paket zeigt die Fig. 5, wobei hier erkennbar ist, daß entlang der einander benachbart liegenden Wellenzüge ein Spalt 9 ausgespart ist, der benachbarte Kanäle 10 miteinander verbindet, die für ein durchströmendes, zumindest anfangs mit Fremdpartikeln befrachtetes Gas bestimmt sind.
Zu dieser Sachlage wird auf die EU-PS 529 422 verwiessen, in der eine analoge Gestalt für aus Einzelfolien zusammengebaute Tropfenabscheider beschrieben ist, von denen sich die gegenständliche Erfindung u.a. dadurch unterscheidet, daß Folienpaare 12 zwar mit ihren Außenseiten entsprechend geformt sind, jedoch in ihrem Inneren den Abstandraum für die Strömungskanäle 7 enthalten. Dadurch wird der Absicht der gegenständlichen Erfindung gefolgt, in den Strömungskanälen 7 eine Flüssigkeit abwärts zu leiten, ohne daß diese in Berührung mit dem in den Kanälen 10 aufwärts strömenden Gas kommt.
Analog zur soeben genannten EU-PS ist es auch, wenn die die Folien zu Paaren verbindenden stegartigen Erhebungen 8 sich entweder nur jeweils über kurze Längen erstrecken, was Fig. 1 veranschaulicht oder aber insgesamt oder über große Längen den Wellenzügen folgend, als von der Gasströmung weitgehend unbehinderte Ablaufrinnen für die mittels der Kanäle 10 und der Spalte 9 aus dem Gas ausgeschiedenen Tropfen dienen.

Somit werden die schmalen Strömungskanäle 7 vom flüssigen Medium durchströmt, die Kanäle 10 mit den großen Querschnittsflächen vom gasförmigen Medium. Dies wird jedoch im Detail im folgenden noch erörtert werden, ebenso die Verbindungsweise der Einzelfolien untereinander zu Paaren und jene der Paare miteinander.

Zur Versorgung der einzelnen Längsverteiler 11 der zu einem Paket zusammengefaßten Folienpaare dient ein Querverteiler 13, der in Fig. 6 in Schrägsicht und in Fig. 7 in Seitensicht dargestellt ist. Auch der Querverteiler 13 ist aus Folien hergestellt und besitzt einen Aufbau, der dem Längsverteiler 11 eines Folienpaares 12 ähnlich ist. Er besitzt einen mittigen Zuleitungskanal 14 mit stumpfwinklig abzweigenden Seitenkanälen 15, von welchen eine Vielzahl nach unten verlaufende, sich kreuzende Verteilkanäle 16 ausgehen, die ihrerseits in einem Längskanal 17 münden, an dessen Unterseite eine Vielzahl von in gleichen Abständen angeordneten Auslaßstutzen 18 angeformt sind, deren Querschnittsform der Querschnittsform der mittigen Zuleitungskanäle der Längsverteiler 11 der Folienpaare 12 entsprechen.

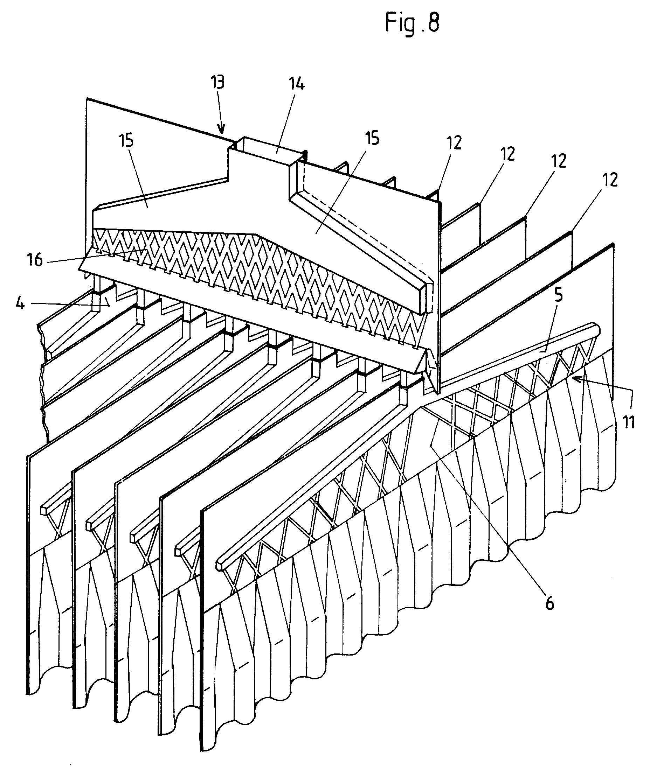

Fig. 8 zeigt in Schrägsicht den oberen Teil eines aus mehreren Folienpaaren 12 gebildeten Paketes und die Verbindung des Querverteilers 13 mit den jedem Folienpaar 12 zugeordneten Längsverteiler 11. Am mittleren Zuleitungskanal 14 des Querverteilers 13 wird die hier nicht gezeigte Zuleitung angeschlossen, über welche das flüssige Medium dem Querverteiler zugeleitet wird. Dies zum grundsätzlichen Aufbau des oberen Abschnittes der ersten Zone der Reaktorgruppe.

Mit den obigen Bemerkungen ist durchaus nicht gesagt, daß sich die Zuläufe zum Querverteiler und den Längsverteilern unbedingt in der Mitte der jeweiligen Verteiler befinden müßten.
Die Zuläufe können durchaus auch seitlich an den Verteilern angebracht sein, wobei sie nur einen der Schenkel 5 bzw. 15 besäßen, der sich vom Zulauf aus, stumpfwinklig schräg abfallen, erstrecken würde.
Für Folienpaare mit großer horizontaler Breite werden mehrere Zuläufe vorgesehen.

Bei dieser Gelegenheit sei darauf hingewiesen, daß bei Verwendung dünnwandiger Folienpaare bzw. Rohrpaare die Durchlaufmenge der Flüssigkeit durch die Strömungskanäle 7 gleich oder größer sein soll als die jeweilige Zulaufmenge, da ansonsten ein ungutes Aufblähen, eventuell sogar Aufplatzen der Strömungskanäle zu gewärtigen sein kann. Eine solche Mengenbegrenzung der zugeführten Flüssigkeit ermöglicht es auch, sowohl den Anschluß an den Einlauf 14 des Querverteilers als auch die Anschlüsse 4 (Fig. 8) bzw. 18 (Fig. 6) zu den Längsverteilern als einfache, nicht dichtende Steckverbindungen zu gestalten (= einfache Demontage bei Überholungen).

Im folgenden werden nun Reaktorgruppen unterschiedlichen Aufbaus gezeigt und beschrieben:

Fig. 9 zeigt in Schrägsicht die erste Zone 22 und zweite Zone (23 bis 19) einer Reaktorgruppe, bei welchen in jedem Folienpaar die eine Folie 100 erheblich länger ausgebildet ist als die eine Folie 1, wobei die längere Folie 100 die kürzere Folie 1 nach unten überragt.

Der untere Rand 19 dieser langgestreckten Folie 100 ist umgebördelt zur Bildung einer Rinne, wobei diese Rinne auf der Seite der Strömungskanäle 7 des Folienpaares 12 liegt und in ihrem Querschnitt eher hoch und schlank ist, um dem von unten her einströmenden und zwischen den Rinnen durchströmenden Gas keinen großen Widerstand entgegen zu setzen.
Zusätzlich ist es zwecks weiterer Widerstandsminderung ratsam, sowohl die Böden der Rinnen in einem spitzen Winkel gegenüber der Folie 100 ansteigen zu lassen, als auch benachbarte Folien 100 im unteren Teil unterschiedlich tief anzulegen, damit die Rinnen 19 in Bezug aufeinander höhenversetzt sind.

Entlang eines seitlichen unteren Randes des aus den Folien 100 gebildeten Paketes verläuft eine Sammelrinne 20.

Zumeist wird man alle Seiten des Paketes bündig an den vertikalen Wänden des Gehäuses der Anlage anliegen lassen.
Wenn aber die horizontale Querschnittsfläche des Gehäuses so groß ist, daß man aus Gründen der Handlichkeit bei Montage und Wartung mehrere Pakete nebeneinanderstellen muß, können um jedes einzelne Paket Anschlußstücke und/oder vertikale plane Abdeckplatten festgelegt sein, die hier jedoch nicht gezeigt sind. Sie dienen auch zur Stabilisierung des Paketes.

Eine Reaktorgruppe dieser Art kann beispielsweise in Kühlturmen verwendet werden: Das zu kühlende Wasser wird über eine hier nicht dargestellte Zuleitung herangeführt, die in den Zuleitungskanal 14 des Querverteilers 13 mündet, der zusammen mit den nachfolgenden, den einzelnen Folienpaaren 12 zugeordneten Längsverteilern 11 ein Zuleitungskanalsystem bildet. Das Kühlwasser rinnt nun in die Strömungskanäle 7 der einzelnen Folienpaare 12 nach unten, deren äußere Wand von der durch die Kanäle 10 (Fig. 5) nach oben strömenden Kühlluft bestrichen wird. In dieser ersten Zone 22 der Reaktorgruppe wird die Energie durch die Folien 1 eines Folienpaares 12 hindurch ausgetauscht. Hier sind die beiden Medien (Luft und Wasser) voneinander getrennt. Sobald das nach unten durch die Strömungskanäle 7 fließende Kühlwasser die untere Kante 23 der kürzeren Folie 1 des Folienpaketes 12 erreicht hat, tritt es in die zweite Zone der Reaktorgruppe ein. Diese ist als Hybridtauscher gestaltet.
In diesem Hybridtauscher kommt das Kühlwasser mit der nach oben strömenden Kühlluft in direkten Kontakt, wobei es entlang der einen Oberfläche der einen Folie 100 des Folienpaketes 12 fließt, hier bei der Fig. 9 auf der dem Betrachter zugewandten Seite. Die Rückseite dieser Folie 100 bleibt vorerst gänzlich trocken. Das nach unten fließende Kühlwasser erreicht in der Folge die durch den unteren Rand geformte Rinne und wird seitlich über die Sammelrinne 20 abgeleitet. Durch die geschilderte Ableitung des nach unten fließenden Kühlwassers werden Geräusche vermieden, die ansonsten durch das Aufprallen von abfallenden Tropfen entstehen. Im unteren Bereich dieser Zone, wo die Medien zwar nur einseitig in direktem Kontakt miteinander stehen, wird eine hohe Kühlleistung erreicht. Diese ist zwar geringer als der in Füllkörpern mit allseitiger Benetzung und Luftbeströmung pro Raumeinheit erzielbare Wirkungsgrad, kann aber mittels Bauerhöhung ausgeglichen werden, wenn dies die technischen und ökonomischen Gegebenheiten erlauben. Falls aufgrund dieses direkten Medienkontaktes und durch die mit hoher Geschwindigkeit nach oben strömende Luft Wassertropfen oder zumindest Wasserpartikel mitgerissen werden, werden diese in der ersten Zone 22 in deren Kanälen 10 abgeschieden, da für die nach oben strömende Luft die konstruktive Gestaltung dieses oberen Abschnittes 22 als Tropfenabscheider wirkt. Da diese über ihre Längserstreckung hin- und hergehenden Kanäle 10 durch den Spalt 9 (Fig. 5) eine Querverbindung aufweisen, wird dieser Abscheidungseffekt begünstigt, ein Effekt, bedingt durch den erwähnten Spalt 9, der in der EU-PS 529 422 im Detail erläutert und beschrieben ist. Die nach oben abströmende Kühlluft ist daher sehr trocken, so daß ein Kühlturm der gezeigten Art nicht nur ohne Tropfgeräusche arbeitet, sondern auch eine außerordentlich trockenere Kühlluft als Vollkontakt-Füllkörper abgibt, so daß Nebel- und Dampfbildung in der Atmosphäre vermieden oder minimiert werden.

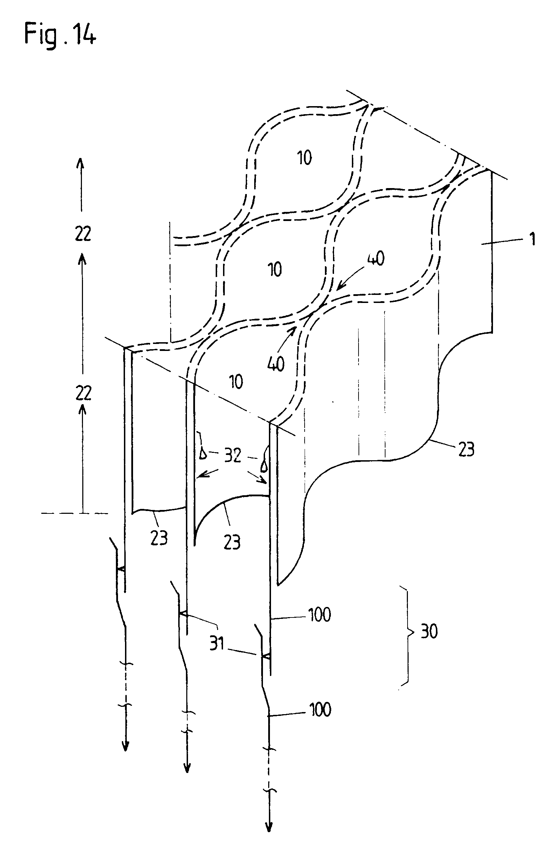

Betreffend die vorstehend beschriebene Bauform muß allerdings zugestanden werden, daß die in den Kanälen 10 in der ersten Zone 22 abgeschiedenen Flüssigkeitstropfen dennoch auf die trocken bleiben sollende Rückseiten der Verlängerungen der Folien 100 gelangen können. Um dies zu vermeiden, besteht eine einfache Möglichkeit: Fig. 14 zeigt einen Ausschnitt durch das Ende der ersten Zone 22 und dem Beginn der zweiten Zone (der Hybridzone), die allerdings nur noch schematisch dargestellt ist. Es ist zu ersehen, daß nach den unteren Kanten 23 der kürzeren Folien 1 und somit dem Ende der Folienpaarungen laut 12 die Folien 100 mit ihren Verlängerungsbereichen weitergehen. Im Bereich 30 sorgen Überlappungen 31 dafür, daß auch die Abscheidungstropfen 32 auf die Naßseite übergeleitet werden und somit die Trockenseite wirklich gänzlich trocken bleibt.

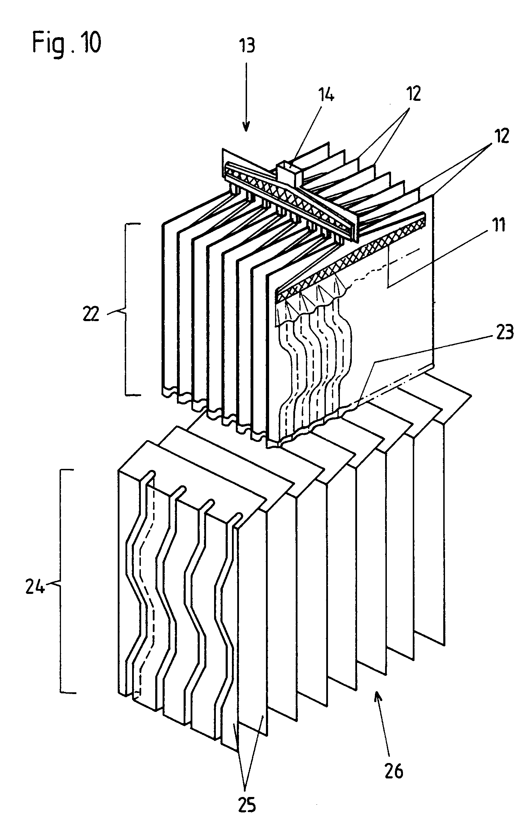

Beim Ausführungsbeispiel nach Fig. 9 ist der untere Abschnitt des Einbaukörpers, in dem die Medien miteinander in direkten Kontakt treten, durch die eine Folie 100 eines Folienpaares 12 gebildet, indem diese eine Folie 100 erheblich länger gemacht ist als die andere Folie 1 dieses Folienpaares 12. Beim Ausführungsbeispiel nach Fig. 10 hingegen, dessen erste und obere Zone 22 korrespondierend zu jenem des Ausführungsbeispieles nach Fig. 9 ausgebildet ist, wobei hier jedoch jeweils die eine Folie eines Folienpaares 12 nur wenig länger ist als die andere Folie, ist die dem direkten Kontakt der Medien dienende Zone 24 durch ein eigenes Paket aus vorzugsweise gewellten oder anderweitig verformten Folien 25 gebildet, das von der unteren Kante 23 des oberen Abschnittes 22 etwas distanziert ist. Dieses hier gezeigte Folienpaket 26 ist so ausgebildet, daß das von der unteren Kante 3 nach unten tropfende Medium die einzelnen Folien 25 dieses Folienpaketes 26 nur einseitig benetzt. Auch Folienpakete dieser Art sind an sich bekannt und beispielsweise in verschiedenen Ausführungsformen in der EU-OS 559 219 gezeigt und beschrieben.

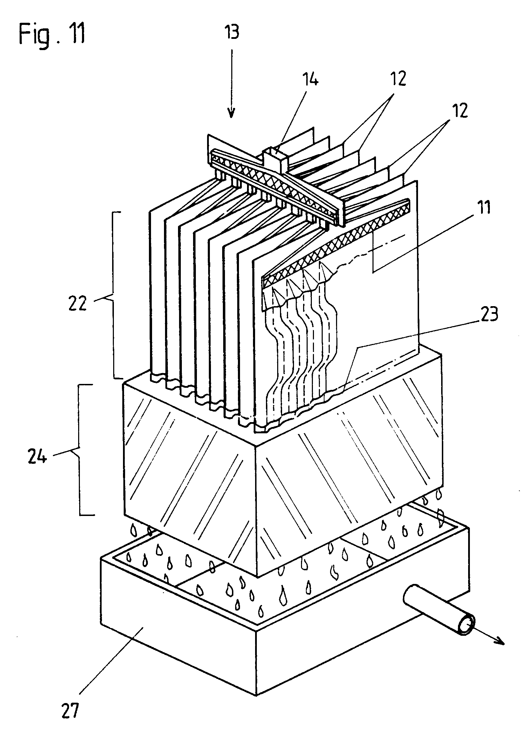

Fig. 11 zeigt ein Ausführungsbeispiel, bei welchem der obere erste Abschnitt 22 jenem entspricht, wie er im Zusammenhang mit den Ausführungsbeispielen nach den Fig. 9 und 10 gezeigt ist. Hier schließt die Zone 24, in der die Medien in direkten Kontakt miteinander treten, direkt an den oberen ersten Abschnitt 22 an. Diese Zone 24 ist ebenfalls durch ein Folienpaket gebildet, dessen einzelne Folien beispielsweise wellenartig verformt sind, wobei durch die wellenartige Verformung und das paketweise Zusammenfügen der Folien Durchströmkanäle geschaffen werden. Solche Folienpakete sind in zahlreichen Ausführungsformen bekanntgeworden.

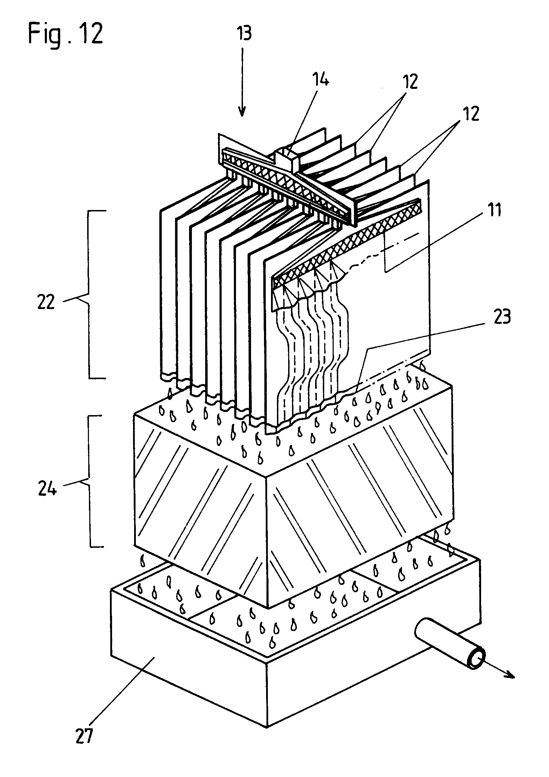

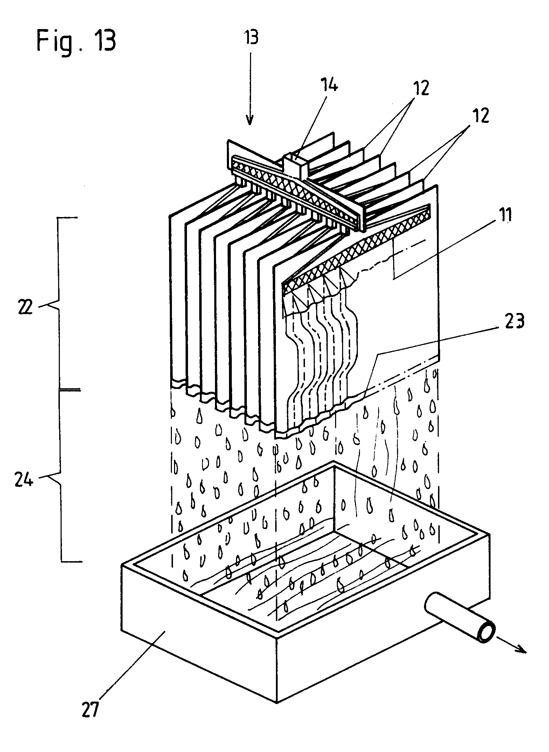

Das Ausführungsbeispiel nach Fig. 12 unterscheidet sich vom letztbesprochenen nach Fig. 11 dadurch, daß das die Zone 24 bildende Folienpaket durch eine Freifallzone von der ersten oberen Zone 22 distanziert ist. Die aus der Zone 24 nach unten abtropfende Flüssigkeit (Fig. 11 und Fig. 12) gelangt in eine Sammelwanne 27 und wird aus dieser abgeleitet. Schlußendlich ist noch das Ausführungsbeispiel nach Fig. 13 zu erwähnen, bei welchem die Zone 24 allein durch den vertikalen Abstand zwischen der Unterkante des oberen Abschnittes 22 und der Sammelwanne 27 gebildet ist, in der das nach unten abtropfende flüssige Medium in direktem Kontakt mit dem nach oben strömenden gasförmigen Medium steht, ohne daß dabei das abtropfende flüssige Medium auf bestimmte und vorgegebene Wege und Pfade gelenkt und geleitet wird, wie dies beispielsweise bei den Ausführungsbeispielen nach Fig. 11 und 12 der Fall ist. Je nach Einsatzzweck und Einsatzort wird der erfindungsgemäße Einbaukörper in dieser oder jener Ausführungsvariante eingesetzt werden. Die Funktionsweise der verschiedenen Ausführungsförmen ergibt sich unmittelbar aus jener, die im Zusammenhang mit Fig. 9 erörtert worden ist.

Der erfindungsgemäße Einbaukörper läßt sich rationell aus tiefgezogenen Folien aufbauen. Grundsätzlich ist es auch möglich, beispielsweise den ersten oberen Abschnitt 22 aus einer Vielzahl vorgeformter Rohre zu gestalten, die nebeneinander angeordnet und miteinander verbunden werden, wobei auch in einem solchen Fall für die Zuleitung und Verteilung des flüssigen Mediums über ein geschlossenes Zuleitungssystem geeignete Maßnahmen vorzusehen sind.

Weiters ist noch folgendes zu erwähnen:

Die Folien- oder Rohrpaare müssen nicht unbedingt den Spalt 9 aufweisen. Sie können an den Eckbereichen auch voll miteinander verbunden sein.

Sowohl die Folienpaare als auch die Rohrpaare können unter sich, aber auch miteinander anstelle unlösbarer Verbindungen (Schweiß- oder Klebverbindungen) mittels Schnappköpfen oder Schnappleisten oder reibschlüssiger Knöpfe bzw. Leisten verbunden sein. (Dies gilt insbesondere für die Randabschlüsse zwischen den Folienpaaren, aber auch insgesamt.) Das ist insbesondere wichtig, wenn der Austauschprozessor öfters einer Generalreinigung unterzogen werden muß.

Zwischen den Folienpaaren (oder den in Reihung angeordneten Rohrpaaren) können auch ebene Folien angeordnet sein. (Das verbessert auch die Abscheid-Ausschleuderung.)

Die Herstellweise aus tiefgezogenen Folien ist nur ein Darstellungsbehelf. Ebenso kann, wo möglich und nützlich, die Thermoplast-Blastechnik angewendet werden.

### Legende zu den Hinweisziffern

- 1: Folie
- 2: Wellenzug
- 3: oberer Rand
- 4: Zuleitungsrinne
- 5: Seitenrinne
- 6: Verteilrinne
- 7: Strömungskanal
- 8: stegartige Erhebung
- 9: Spalt
- 10: Kanal
- 11: Längsverteiler
- 12: Folienpaar
- 13: Querverteiler
- 14: Zuleitungskanal
- 15: Seitenkanal
- 16: Verteilkanal
- 17: Längskanal
- 18: Auslaßstutzen
- 19: unterer Rand
- 20: Sammelrinne
- 21: offene Seite
- 22: erster Abschnitt
- 23: untere Kante
- 24: Zone
- 25: Folie
- 26: Folienpaket
- 27: Sammelwanne
- 100: Folie

## Patentansprüche

1. Einbaukörper für Anlagen zum Energie- und/oder Stoffaustausch und/oder zur Bewirkung von chemischen Reaktionen zwischen einem flüssigen und einem gasförmigen Medium wie beispielsweise Kühltürme, Gaswäscher, Reaktionskolonnen u. dgl., wobei der Einbaukörper von den beiden Medien in einander entgegengesetzen Richtungen durchströmt dadurch gekennzeichnet, daß er einen ersten Abschnitt (22) aufweist, der aus einer Vielzahl von im wesentlichen vertikal angeordneten, über ihre Länge einen hin- und hergehenden Verlauf aufweisenden, zu einem Paket zusammengefügten, vom flüssigen Medium durchströmten Strömungskanälen (7) besteht, wobei die einzelnen Strömungskanale (7) an ihrer oben liegenden Eintrittsseite zur Zuleitung des flüssigen Mediums mit einem geschlossenen Zuleitungskanalsystem verbunden sind und die zwischen den vom flüssigen Medium durchströmten, innerhalb des Paketes vorgesehenen Strömungskanälen (7) ausgesparten kanalartigen Zwischenräume beidseitig zum Durchlaß des gasförmigen Mediums offen sind und an die Unterseite des den ersten Abschnitt (22) bildenden Paketes mindestens eine dem direkten Kontakt der Medien dienende Zone als weiterer Abschnitt anschließt.

2. Einbaukörper nach Anspruch 1, dadurch gekennzeichnet, daß das den ersten Abschnitt (22) bildende Paket aus nebeneinander angeordneten Folienpaaren (12) gebildet ist, wobei die einzelnen Folien (1) eines Folienpaares (12) parallel zueinander verlaufende, hin- und hergehende Wellenzüge (2) aufweisen und zur Bildung der vom flüssigen Medium durchströmten Strömungskanäle (7) jeweils zwei Folien (1) unter Wahrung eines Abstandes zusammengefügt sind, wobei die rinnenartigen Vertiefungen der Wellenzüge der einen Folie (1) kammartig in die rinnenartigen Vertiefungen der anderen Folie eingreifen bzw. umgekehrt (Fig. 3).

3. Einbaukörper nach Anspruch 2, dadurch gekennzeichnet, daß die vertikale Erstreckung der einen Folie eines Folienpaares (12) größer ist als die der anderen Folie und die längere Folie die kürzere nach unten überragt (Fig. 9).

4. Einbaukörper nach Anspruch 3, dadurch gekennzeichnet, daß die vertikale Erstreckung der einen Folie annähernd doppelt so groß oder größer ist wie jene der anderen Folie eines Folienpaares (12).

5. Einbaukörper nach Anspruch 3 oder 4, dadurch gekennzeichnet, daß der untere Rand (19) der längeren Folie (100) eines Folienpaares (12) zur Bildung einerRinne umgebördelt ist und diese Rinne auf der Seite der Strömungskanäle (7) des Folienpaares (12) liegt.

6. Einbaukörper nach Anspruch 1, dadurch gekennzeichnet, daß die dem direkten Kontakt der Medien dienende Zone (24) aus zu einem Paket miteinander verbundenen, vorzugsweise gewellten Folien gebildet ist, die innerhalb des Paketes verlaufende Strömungskanäle begrenzen.

7. Einbaukörper nach Anspruch 1 oder 6, dadurch gekennzeichnet, daß das dem direkten Kontakt der Medien dienende, aus Folien aufgebaute Paket von der Unterseite des ersten Abschnittes (22) distanziert ist.

8. Einbaukörper nach Anspruch 1, dadurch gekennzeichnet, daß zur Zuleitung des flüssigen Mediums in die Strömungskanäle (7) der Folienpaare (12) des ersten Abschnittes (22) mindestens ein quer zur gedachten Mittelebene der Folienpaare (12) angeordneter Querverteiler (13) und jedem Folienpaar (12) ein Längsverteiler (11) zugeordnet ist und beide Verteiler (11, 13) im wesentlichen denselben Aufbau besitzen.

9. Einbaukörper nach Anspruch 8, dadurch gekennzeichnet, daß jeder Verteiler (11, 13) einen mittigen Zuleitungskanal (14) mit stumpfwinklig abzweigenden Seitenkanälen (15) aufweist, von welchen eine Vielzahl von nach unten verlaufenden, sich ggf. kreuzenden Verteilkanäle (16) ausgehen.

10. Einbaukörper nach Anspruch 8 oder 9, dadurch gekennzeichnet, daß die Verteilkanäle (16) des Querverteilers (13) in einen gemeinsamen Längskanal (7) münden, an dessen Unterseite eine Vielzahl von in gleichen Abständen angeordneten Auslaßstutzen (18) zum Anschluß an die mittigen Zuleitungskanäle der Längsverteiler (11) der Folienpaare (12) angeformt sind (Fig. 6 und 8).

11. Einbaukörper nach Anspruch 8 oder 9, dadurch gekennzeichnet, daß die Verteilkanäle der Längsverteiler (11) in die Strömungskanäle (7) der jeweiligen Folienpaare des den ersten Abschnitt (22) bildenden Paketes münden.

12. Einbaukörper nach Anspruch 8, dadurch gekennzeichnet, daß Quer- und/oder Längsverteiler (11, 13) aus tiefgezogenen Folien gebildet sind.

13. Einbaukörper nach Anspruch 2 und 8, dadurch gekennzeichnet, daß die zur Bildung des Längsverteilers (11) dienende tiefgezogene Folie einstückig mit einer zu einem Folienpaar (12) zusammenzufügenden Folie ausgebildet ist.

## Claims

1. An insert member for plants for exchanging energy and/or substances and/or for producing chemical reactions between a liquid and a gaseous medium, such as for example cooling towers, gas scrubbers, reaction columns and the like, in which the insert member is traversed by the two media in mutually opposite directions, **characterized in that** it has a first portion (22) which comprises a plurality of flow ducts (7) which are arranged essentially vertically and have a shape extending backwards and forwards over their length and which are joined together to form a stack and are traversed by the liquid medium, wherein the individual flow ducts (7) are connected to a closed supply-line system at their upper entry end for supplying the liquid medium, and the duct-like interspaces which are formed between the flow ducts (7) traversed by the liquid medium and provided inside the stack are open on both sides for the passage of the gaseous medium, and the underside of the stack which forms the first portion (22) has attached thereto as a further portion at least one zone which is used for the direct contact of the media.

2. An insert member according to Claim 1, **characterized in that** the stack forming the first portion (22) is formed by pairs of foils (12) arranged adjacent to each other, wherein the individual foils (1) of a pair of foils (12) have corrugations (2) extending backwards and forwards and extending parallel to one another and two respective foils (1) are joined together while retaining a space in order to form the flow ducts (7) traversed by the liquid medium, wherein the channel-like depressions of the corrugations of one foil (1) engage in the manner of a comb in the channel-like depressions of the other foil and *vice versa* (Fig. 3).

3. An insert member according to Claim 2, **characterized in that** the vertical extension of one foil of a pair of foils (12) is greater than that of the other foil, and the longer foil extends downwards beyond the shorter one (Fig. 9).

4. An insert member according to Claim 3, **characterized in that** the vertical extension of one foil is approximately twice as great as or greater than that of the other foil of a pair of foils (12).

5. An insert member according to Claim 3 or 4, **characterized in that** the lower edge (19) of the longer foil (100) of a pair of foils (12) is flanged over to form a channel and this channel rests on the side of the flow ducts (7) of the pair of foils (12).

6. An insert member according to Claim 1, **characterized in that** the zone (24) used for the direct contact of the media is formed by preferably corrugated foils which are joined together to form a stack and which bound flow ducts extending inside the stack.

7. An insert member according to Claim 1 or 6, **characterized in that** the stack used for the direct contact of the media and formed by foils is spaced from the underside of the first portion (22).

8. An insert member according to Claim 1, **characterized in that**, in order to supply the liquid medium into the flow ducts (7), at least one transverse distribution means (13) arranged transversely to the notional median plane of the pair of foils (12) of the first portion (22) is associated with the pair of foils (12) and a longitudinal distribution means (11) is associated with each pair of foils (12), and the two distribution means (11, 13) have essentially the same design.

9. An insert member according to Claim 8, **characterized in that** each distribution means (11, 13) has a central supply duct (14) with lateral ducts (15) which branch off at an obtuse angle and from which a plurality of downwardly extending and possibly intersecting distribution ducts (16) start.

10. An insert member according to Claim 8 or 9, **characterized in that** the distribution ducts (16) of the transverse distribution means (13) open into a common longitudinal duct (7), on the underside of which a plurality of equally spaced outlet sockets (18) are integrally formed for attachment to the central supply ducts of the longitudinal distribution means (11) of the pair of foils (12) (Figs. 6 and 8).

11. An insert member according to Claim 8 or 9, **characterized in that** the distribution ducts of the longitudinal distribution means (11) open into the flow ducts (7) of the respective pairs of foils of the stack forming the first portion (22).

12. An insert member according to Claim 8, **characterized in that** the transverse and/or longitudinal distribution means (11, 13) are formed from deep-drawn foils.

13. An insert member according to Claims 2 and 8, **characterized in that** the deep-drawn foil used for forming the longitudinal distribution means (11) is formed in one piece with a foil to be joined to a pair of foils (12).

## Revendications

1. Corps d'encastrement pour installations pour le transfert d'énergie et/ou de matières et/ou pour provoquer des réactions chimiques entre un agent liquide et un agent gazeux, par exemple dans des tours de refroidissement, des épurateurs de gaz, des colonnes de réaction et des dispositifs analogues, le corps d'encastrement étant parcouru par les deux agents dans des sens mutuellement opposés, caractérisé en ce qu'il présente une première section (22) qui est constituée d'une série de canaux d'écoulement (7) agencés en substance verticalement, présentant sur leur longueur un trajet en va-et-vient, regroupés en un paquet et parcourus par l'agent liquide, les canaux d'écoulement individuels (7) étant reliés, sur leur côté d'entrée supérieur, à un système de canalisation d'alimentation fermé pour acheminer l'agent liquide, les espaces intermédiaires en forme de canaux ménagés entre les canaux d'écoulement (7) disposés dans le paquet et parcourus par l'agent liquide étant ouverts des deux côtés pour laisser passer l'agent gazeux et au moins une zone servant au contact direct entre les agents se raccordant, comme autre section, à la partie inférieure du paquet formant la première section (22).

2. Corps d'encastrement selon la revendication 1, caractérisé en ce que le paquet formant la première section (22) est constitué de paires de feuilles (12) agencées les unes à côté des autres, les feuilles individuelles (1) d'une paire de feuilles (12) présentant des trajets ondulés (2) en va-et-vient s'étendant parallèlement les uns aux autres et, respectivement, deux feuilles (1) étant assemblées à distance l'une de l'autre pour former les canaux d'écoulement (7) parcourus par l'agent liquide, les évidements en forme de rigoles des trajets ondulés d'une feuille (1) s'engageant en assemblage en peigne dans les évidements en forme de rigoles de l'autre feuille et vice-versa (Fig. 3).

3. Corps d'encastrement selon la revendication 2, caractérisé en ce que l'extension verticale d'une feuille d'une paire de feuilles (12) est plus grande que celle de l'autre feuille et la feuille la plus longue dépasse la plus courte vers le bas (Fig. 9).

4. Corps d'encastrement selon la revendication 3, caractérisé en ce que l'extension verticale de la première feuille est approximativement deux fois aussi grande ou plus grande que celle de l'autre feuille d'une paire de feuilles (12).

5. Corps d'encastrement selon la revendication 3 ou 4, caractérisé en ce que le bord inférieur (19) de la feuille la plus longue (100) d'une paire de feuilles (12) est rabattu pour former une rigole et cette rigole se trouve du côté des canaux d'écoulement (7) de la paire de feuilles (12).

6. Corps d'encastrement selon la revendication 1, caractérisé en ce que la zone (24) servant au contact direct entre les agents est formée de feuilles de préférence ondulées raccordées les unes aux autres pour former un paquet, lesdites feuilles délimitant des canaux d'écoulement s'étendant à l'intérieur du paquet.

7. Corps d'encastrement selon la revendication 1 ou 6, caractérisé en ce que le paquet constitué de feuilles servant au contact direct entre les agents est espacé de la partie inférieure de la première section (22).

8. Corps d'encastrement selon la revendication 1, caractérisé en ce que, pour acheminer l'agent liquide dans les canaux d'écoulement (7) de la paire de feuilles (12) de la première section (22), on affecte au moins un distributeur transversal (13) agencé transversalement au plan central fictif de la paire de feuilles (12) et à chaque paire de feuilles (12) un distributeur longitudinal (11) et les deux distributeurs (11, 13) ont sensiblement la même structure.

9. Corps d'encastrement selon la revendication 8, caractérisé en ce que chaque distributeur (11, 13) présente un canal d'alimentation central (14) avec des canaux latéraux (15) qui en dérivent en angle obtus, d'où partent une série de canaux de distribution (16) qui s'étendent vers le bas et qui se croisent éventuellement.

10. Corps d'encastrement selon la revendication 8 ou 9, caractérisé en ce que les canaux de distribution (16) du distributeur transversal (13) débouchent dans un canal longitudinal commun (7) sur la partie inférieure duquel sont formées une série de tubulures de décharge (18) agencées à distances égales pour se raccorder aux canaux d'alimentation centraux des distributeurs longitudinaux (11) de la paire de feuilles (12) (Fig. 6 et 8).

11. Corps d'encastrement selon la revendication 8 ou 9, caractérisé en ce que les canaux de distribution des distributeurs longitudinaux (11) débouchent dans les canaux d'écoulement (7) de la paire de feuilles respective du paquet formant la première section (22).

12. Corps d'encastrement selon la revendication 8, caractérisé en ce que les distributeurs transversaux et/ou longitudinaux (11, 13) sont formés de feuilles embouties.

13. Corps d'encastrement selon les revendications 2 et 8, caractérisé en ce que la feuille emboutie servant à former le distributeur longitudinal (11) est formée d'une pièce avec une feuille assemblée avec une paire de feuilles (12).
